# EUROPÄISCHE PATENTANMELDUNG

(11) **EP 2 279 988 A2**
(43) Veröffentlichungstag der Anmeldung: **02.02.2011**
(21) Anmeldenummer: 10005633.2
(22) Anmeldetag: 31.05.2010
(51) Int. Cl.: C04B 35/14, C04B 38/00

(54) **Verfahren zur Herstellung von Schaumdiatomitsteinen**

(30) Priorität: 27.07.2009 RU 2009128799
(71) Anmelder: OOO "Diatomit-Invest", 432700 Ulyanovsk (RU); Nikiforovich, Evgeny A., Ulyanovsk 432011 (RU)
(72) Erfinder: Nikiforovich, Evgeny Alexandrovich, 432011 Ulyanovsk (RU)
(74) Vertreter: Jeck, Anton

(57) **Zusammenfassung**

Die Erfindung betrifft ein Verfahren zur Herstellung von Schaumdiatomitsteinen einschließlich einer Zubereitung von Diatomitrohgut, eines Einlegens in Formen, einer Verdichtung, einer Entformung, einer Trocknung in Öfen, einer langsamen Kühlung bis zur Umgebungstemperatur, einer Ausscheidung und einer Ablage in einem Wagen, eines Backens und einer Kühlung bis zur Umgebungstemperatur. Ist dabei vorgesehen, dass das Diatomitrohgemisch unter Zugabe eines feinkörnigen Diatomitpulvers mit einer Feuchte von max. 3 - 8 % zubereitet wird, dass die Verdichtung des formgegossenen Rohlings auf einem Schütteltisch mit einer Frequenz von 50 - 60 Hz und einer Amplitude von 2 mm innerhalb von 2 - 20 Sek. durchgeführt wird und dass ein Nachpressen bei einem Druck von 0,2 - 0,5 MPa im Laufe von 1 - 20 Sek. vorgenommen wird, dann werden die Arbeitsabläufe verkürzt, die Arbeitsaufwändigkeit vermindert und das Fertigprodukt schneller und billiger hergestellt.

## Beschreibung

Die Erfindung betrifft ein Verfahren zur Herstellung von Schaumdiatomitsteinen nach dem Oberbegriff des Anspruchs 1.

Die Erfindung kann bei der Herstellung von Baustoffen sowie bei der Herstellung von Wärmedämmstoffen und insbesondere bei der Herstellung von Schaumdiatomitsteinen eingesetzt werden.

Aus dem RU Nr. 2225289 (KI. B28B5/00, veröffentlicht am 10.03.2004) ist ein Verfahren zur Herstellung von Schaumdiatomitsteinen bekannt, welches folgende Schritte einschließt:
- Herstellung und Formgießen eines Schaumdiatomitrohguts,
- Trocknung in Öfen während einer Zeit und bei einer Temperatur, welche dafür ausreichend sind, eine Restfeuchte des Schaumdiatomitrohguts von max. 20 % zu erreichen,
- langsame Kühlung bis zur Umgebungstemperatur,
- Entformung,
- Ausscheidung (Rückweisung) und Ablage in einem Wagen,
- Aufwärmen in Öfen bis zu einer Maximaltemperatur im Laufe von einem Drittel der für die Wärmebehandlung vorgesehenen Zeit,
- Halten bei dieser Temperatur im Laufe von einem weiteren Drittel der für die Wärmebehandlung vorgesehenen Zeit,
- Kühlung bis zur Umgebungstemperatur.

Beim Einsatz dieses bekannten Verfahrens kann aber das unten genannte technische Ergebnis nicht erreicht werden. Das liegt unter anderem daran, dass das Schaumdiatomitsteinhalbzeug als hochfeuchtes, teigartiges Rohgemisch in spezielle Gussformen abgegossen wird. Die sachgemäße Entfeuchtung des Rohgemischs (bis die erforderliche Feuchte erreicht wird) ist sehr zeit- und energieaufwändig. Darüber hinaus sind die Halbzeuge aus einem solchen Rohgemisch für eine bedeutende Rissbildung anfällig. Das vergrößert den Ausschussanteil.

Es ist Aufgabe der Erfindung, ein Verfahren zur Herstellung von Schaumdiatomitsteinen zu schaffen; bei dem die Arbeitsabläufe verkürzt werden, die Arbeitsaufwändigkeit vermindert wird und das Fertigprodukt schneller und billiger hergestellt werden kann.

Die gestellte Aufgabe wird durch die Merkmale des Anspruchs 1 gelöst.

Das Diatomitrohgemisch wird unter Zusatz eines feinkörnigen Diatomitpulvers mit einer Feuchte von max. 3 - 8 % zubereitet. Die Verdichtung des formgegossenen Rohguts erfolgt auf einem Schütteltisch mit einer Frequenz von 50 - 60 Hz und einer Amplitude von 2 mm innerhalb von 2 - 20 Sek. Ein Nachpressen erfolgt bei einem Druck von 0,2 - 0,5 MPa im Laufe von 1 - 20 Sek. Eine Trocknung in Öfen erfolgt bei folgenden Behandlungsbedingungen: Erwärmen bis zu einer Temperatur von 20 - 100° C über eine Dauer von 12 Stunden, Halten einer Temperatur von 100° C über eine Zeitdauer von 18 Stunden und Kühlung bis zu einer Temperatur von 20° C über eine Dauer von 2 Stunden. Ein Backen in Öfen erfolgt bei folgenden Behandlungsbedingungen: Erwärmen bis zu einer Temperatur von 20 - 800° C über eine Zeitdauer von 8 Stunden, Halten einer Temperatur von 850 - 900° C über eine Zeitdauer von 4 Stunden, Halten einer Maximaltemperatur von 950° C über eine Zeitdauer von 1 Stunde und Kühlung bis zu einer Temperatur von 20° C über eine Zeitdauer von 5 Stunden.

Der Einsatz des vorgeschlagenen Verfahrens stellt das folgende technische Ergebnis sicher:
- eine Minderung der Arbeitsaufwändigkeit durch Kürzung der Arbeitsabläufe;
- eine Kürzung der Herstellungszeit des Fertigprodukts und somit eine Selbstkostensenkung bei der Produktion der Fertigwaren.

Das genannte technische Ergebnis wird bei der Ausführung der Erfindung folgenderweise erreicht:

Das Verfahren zur Herstellung von Schaumdiatomitsteinen umfasst folgende Schritte:
- Zubereitung von Diatomitrohgut,
- Einlegen in Formen,
- Verdichtung,
- Entformung,
- Trocknung in Öfen,
- langsame Kühlung bis zur Umgebungstemperatur,
- Ausscheidung und Ablage in einem Wagen,
- Backen und
- Kühlung bis zur Umgebungstemperatur.

Die Besonderheit besteht darin, dass das Diatomitrohgemisch unter Zugabe eines feinkörnigen Diatomitpulvers mit einer Feuchte von max. 3 - 8% zubereitet wird. Die Verdichtung des formgegossenen Rohguts erfolgt auf einem Schütteltisch mit einer Frequenz von 50 - 60 Hz und einer Amplitude von 2 mm innerhalb von 2 - 20 Sek. Das Nachpressen erfolgt bei einem Druck von 0,2 - 0,5 MPa im Laufe von 1 - 20 Sek. Eine Trocknung in Öfen erfolgt bei folgenden Behandlungsbedingungen: Erwärmen bis zu einer Temperatur von 20 - 100° C über eine Zeitdauer von 12 Stunden, Halten einer Temperatur von 100° C über eine Zeitdauer von 18 Stunden, Kühlung bis zu einer Temperatur von 20° C über eine Zeitdauer von 2 Stunden. Das Backen in Öfen erfolgt bei folgenden Behandlungsbedingungen: Erwärmen bis zu einer Temperatur von 20 - 800° C über eine Zeitdauer von 8 Stunden, Halten einer Temperatur von 850 - 900° C über eine Zeitdauer von 4 Stunden, Halten einer Maximaltemperatur von 950° C über eine Zeitdauer von 1 Stunde und Kühlung bis zu einer Temperatur von 20° C über eine Zeitdauer von 5 Stunden.

Dank der durch den Anmelder vorgenommenen Analyse des Stands der Technik einschließlich der Patentrecherchen sowie der Recherchen nach wissenschaftlichtechnischen Referenzdokumenten und durch die Erfassung von den für den Stand der Technik und die angemeldete Erfindung relevanten Dokumenten wurde festgestellt, dass es keine Vergleichserzeugnisse gibt, deren Merkmale allen kennzeichnenden und wesentlichen Merkmalen der angemeldeten Erfindung identisch wären. Die Bestimmung eines Prototyps (der Gesamtheit der wesentlichen Merkmale nach) als am nächsten kommender Stand der Technik aus der Liste der festgestellten relevanten Vergleichserzeugnisse ermöglichte es, die Gesamtheit von wesentlichen Kennzeichen im angemeldeten und in den Patentansprüchen genannten Verfahren zu erkennen, welche gegenüber dem vom Anmelder ersehenen technischen Ergebnis relevant sind.

Folglich ist die genannte Erfindung neu.

Der Einsatz des angemeldeten Verfahrens zur Herstellung von Schaumdiatomitsteinen ermöglicht es, das Erzeugnis mit folgenden physikalischen und mechanischen Kennwerten zu fertigen:
- Raumgewicht, kg/m³ von 350 - 500 und
- Druckfestigkeit, MPa von 0,6 - 1,0.

Das vorgeschlagene Verfahren kann in Industriebetrieben zur Herstellung von Schaumdiatomiterzeugnissen sowie für deren Trocknung und Backen angewendet werden. Während der mechanischen Maßbehandlung (Behandlung nach vorgegebenen Maßen) des gebackenen Diatomiterzeugnisses (z. B. unter Einsatz eines Schleifwerkzeugs) entsteht unvermeidlich ein Abfallprodukt. Das ist Pulver, dessen Korngröße zu 90 % 10 - 15 µm beträgt. Die Feuchte dieses Pulvers beträgt max. 3 - 8 %.

Die Zugabe eines solchen Pulvers ins Rohgemisch bei der Herstellung von Schaumdiatomitsteinen trägt zur Senkung der Gesamtfeuchte des Ansatzes vor seinem Formgießen sowie vor dem Trocknen bei. Das verkürzt letztendlich die Trocknungszeit der Fertigware und senkt somit die Selbstkosten bei der Herstellung von Schaumdiatomitsteinen.

Folglich zeugt die obige Beschreibung davon, dass beim Einsatz der angemeldeten Erfindung folgende Gesamtheit von Bedingungen erfüllt wird:
- die angemeldete Erfindung dient bei ihrer Ausführung zur Herstellung von Schaumdiatomitsteinen;
- es wurde nachgewiesen, dass das angemeldete Verfahren unter Einsatz der in der Anmeldung beschriebenen Mittel und Vorgehensweisen in Übereinstimmung mit den Ansprüchen wirklich ausgeführt werden kann;
- die angemeldete Erfindung kann bei ihrer Ausführung die vom Anmelder vorgegebenen und gestellten technischen Aufgaben lösen.

Somit ist die angemeldete Erfindung gewerblich anwendbar.

## Patentansprüche

1. Verfahren zur Herstellung von Schaumdiatomitsteinen einschließlich einer Zubereitung von Diatomitrohgut, eines Einlegens in Formen, einer Verdichtung, einer Entformung, einer Trocknung in Öfen, einer langsamen Kühlung bis zur Umgebungstemperatur, einer Ausscheidung und einer Ablage in einem Wagen, eines Backens und einer Kühlung bis zur Umgebungstemperatur,
**dadurch gekennzeichnet,**
**dass** das Diatomitrohgemisch unter Zugabe eines feinkörnigen Diatomitpulvers mit einer Feuchte von max. 3 - 8 % zubereitet wird,
**dass** die Verdichtung des formgegossenen Rohguts auf einem Schütteltisch mit einer Frequenz von 50 - 60 Hz und einer Amplitude von 2 mm innerhalb von 2 - 20 Sek. durchgeführt wird und
**dass** ein Nachpressen bei einem Druck von 0,2 - 0,5 MPa im Laufe von 1 - 20 Sek. vorgenommen wird.

2. Verfahren nach Anspruch 1
**dadurch gekennzeichnet,**
**dass** die Trocknung in Öfen bei folgenden Behandlungsbedingungen vorgenommen wird: Erwärmen bis zu einer Temperatur von 20 - 100° C über eine Zeitdauer von 12 Stunden, Halten einer Temperatur von 100° C über eine Zeitdauer von 24 Stunden und Kühlung bis zu einer Temperatur von 20° C über eine Zeitdauer von 2 Stunden.

3. Verfahren nach Anspruch 1
**dadurch gekennzeichnet,**
**dass** das Backen in Öfen bei folgenden Behandlungsbedingungen erfolgt: Erwärmen bis zu einer Temperatur von 20 - 800° C über eine Zeitdauer von 8 Stunden, Halten einer Temperatur von 850 - 900° C über eine Zeitdauer von 4 Stunden, Halten bei einer Maximaltemperatur von 950° C über eine Zeitdauer von 1 Stunde und Kühlung bis zu einer Temperatur von 20° C über eine Zeitdauer von 5 Stunden.
